# EUROPEAN PATENT APPLICATION

(11) **EP 2 450 145 A2**
(43) Date of publication of application: **09.05.2012**
(21) Application number: 11187765.0
(22) Date of filing: 03.11.2011
(51) Int. Cl.: B23K 37/04, B25B 5/06, B25B 5/16

(54) **Linkage clamp**

(30) Priority: 05.11.2010 US 410487 P; 26.10.2011 US 281512
(71) Applicant: Delaware Capital Formation, Inc., Wilmington, Delaware 19809 (US)
(72) Inventor: Schauss, Peter, 65439 Flörsheim (DE)
(74) Representative: Müller, Thomas Michael

(57) **Abstract**

A clamp (10) has a powered actuator (12) that includes an arm (18) moving between a first and a second position. A linkage mechanism (14) has a link (40) and a base (42). The link and base are pivotally connected with one another. The link (40) couples with the arm (18) of the cylinder. The bracket (80) couples with the actuator (12) and the base (42). The bracket is movable along the base for adjusting the angle opening between the link and the base.

## Description

### FIELD

The present disclosure relates to clamps and, more particularly, to an open style power clamp.

### BACKGROUND

Power clamps in the past have included a housing enclosing the clamping structure. Thus, the clamps can be utilized for a single operation. While the clamps work satisfactory for their intended purpose, they are incapable of being modified to be used in various types of operations.

The present disclosure provides a clamp that has an adjustable opening angle that enables the clamp to be used in numerous operations. A cylinder may be positioned on a linkage base and assembled in various positions along the base to provide for different opening angles. The present disclosure enables the same parts to be used with numerous cylinders with different diameters. The present disclosure may be utilized with an electric linear drive. Sensors are positioned on the clamp such that they are protected against shock and splatter during welding operations. Clamps may be assembled with one another to provide bigger opening angles.

### SUMMARY

Accordingly to an object of the present disclosure, a clamp comprises an actuator, such as a pneumatic or hydraulic cylinder or electric linear drive. The actuator is coupled with a linkage to move a link between a first and second position. The actuator may include a bracket that is secured onto a linkage base. The base is movably coupled with the link. The bracket is adjustable along the base to vary the position of the actuator which, in turn, adjusts the opening angle of the link with respect to the actuator.

The link can, however, also been coupled to the base directly. A plurality of different sized actuators can be utilized with the same linkage. A sensor is positioned between the link and the base for sensing the opening angle. The sensor is fixed to at least the length of the base. Additionally, a pair of sensor pickup pins is fixed to the length or the base. The pins activate the sensor to determine the first and second open position. One of the sensor pins is fixed in position and the other is adjustable along the length of the base.

The linkage mechanism can alternatively include a pair of links. The links are pivotable connected with one another. A first link is coupled with the arm of the power actuator. The second link is coupled with the actuator. The power actuator is movable along the second link to adjust an opening angle between the pair of links. A plurality of different sized actuators can be utilized with the same linkage. A sensor is positioned between the link and the base for sensing the opening angle. The sensor is fixed to at least the length of the base. Additionally, a pair of sensor pick-up pins is fixed to the length or the base. The pins activate the sensor to determine the first and second open position. One of the sensor pins is fixed in position and the other is adjustable along the length of the base.

Further areas of applicability will become apparent from the description provided herein. The description and specific examples in this summary are intended for purposes of illustration only and are not intended to limit the scope of the present disclosure.

### DRAWINGS

The drawings described herein are for illustrative purposes only of selected embodiments and not all possible implementations, and are not intended to limit the scope of the present disclosure.

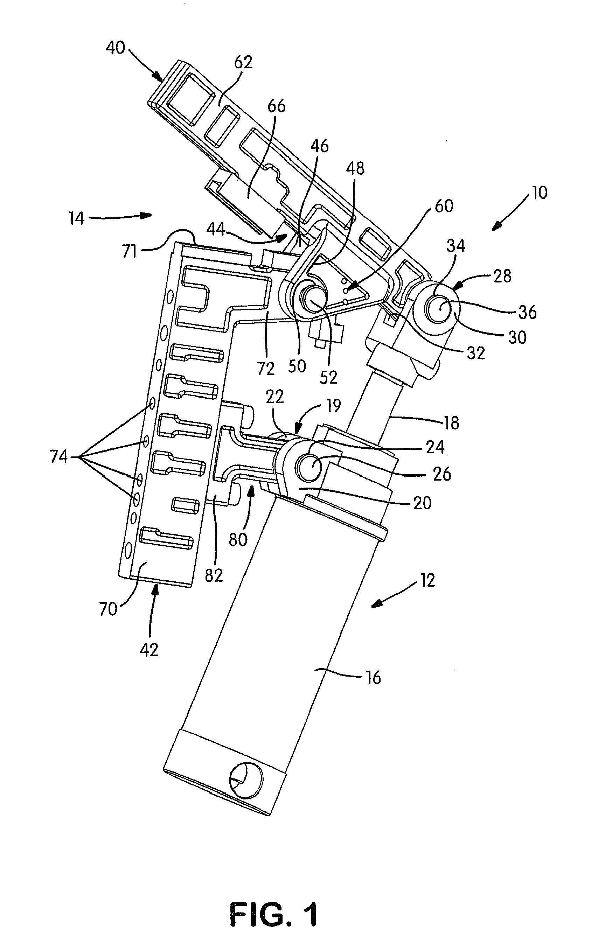

FIG. 1 is a perspective view of a clamp assembly.

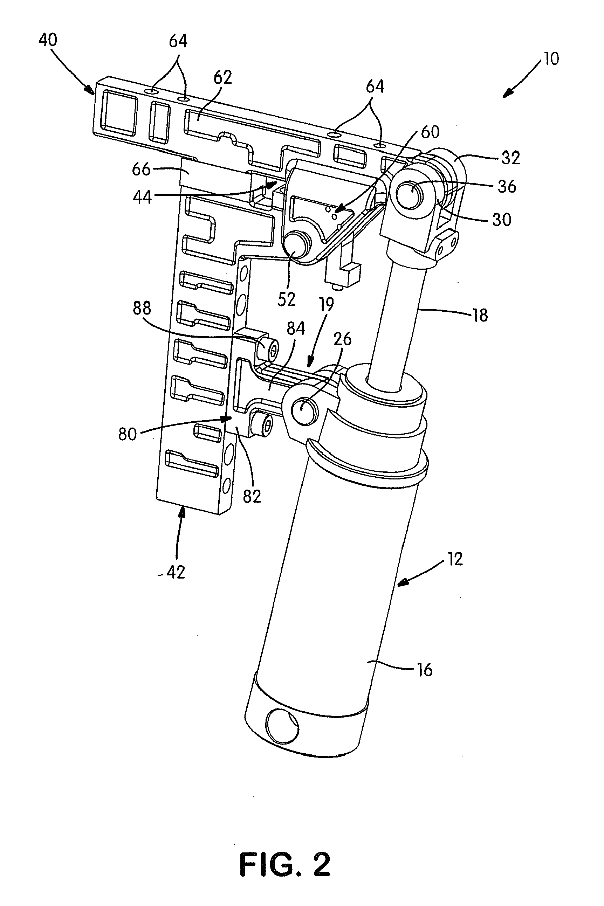

FIG. 2 is a perspective view of a clamp assembly.

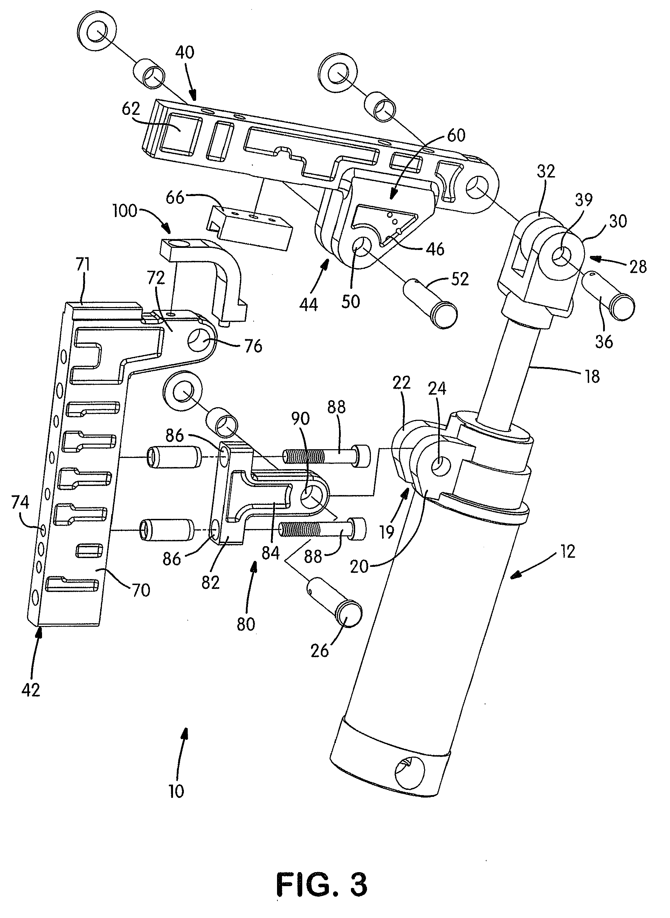

FIG. 3 is an exploded view of FIGS 1 and 2.

FIG. 4 is a cross-sectional view of the sensor indicating a closed position.

FIG. 5 is a cross-sectional view of the sensor indicating an open position.

FIG. 6 is a perspective view of an additional clamp assembly.

### DETAILED DESCRIPTION

Turning to the figures, a clamp assembly is illustrated and designated with the reference numeral 10. The clamp assembly 10 includes an actuator 12 and a linkage 14. The actuator 12 may be a cylinder of the hydraulic or pneumatic type as illustrated. Additionally, an electric linear drive may be utilized as the actuator 12.

The actuator 12 includes a housing 16 with a rod 18 extending from the housing 16. While not shown, the rod 18 is connected to a piston that moves in response to fluid pressure within the housing 16 as is well known in the field. A clevis 19 projects from the housing 16. The clevis 19 includes a pair of ears 20, 22, both that include bores 24 to receive a clevis pin 26. The piston rod 18 likewise includes a clevis 28 with ears 30, 32 that include bore 34 to receive a clevis pin 36.

The linkage 14 includes a link member 40 and a base member 42. The link member 40 includes a clevis 44 with ears 46, 48. The ears include bores 50 that receive a clevis pin 52. At least one of the ears 50 includes a plurality of apertures 60. The apertures 60 receive a pin that communicates with a sensor as described herein.

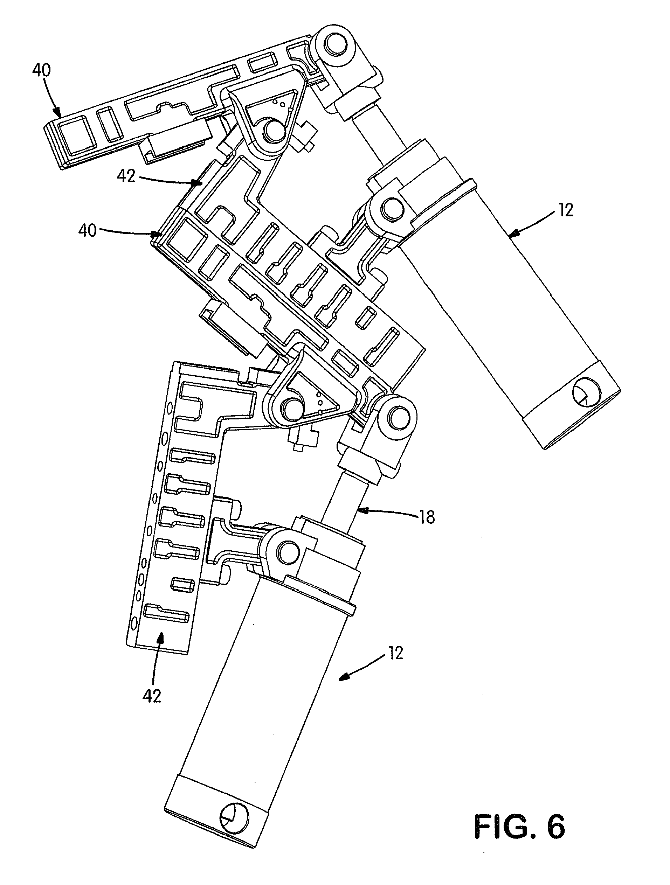

The link 40 has an overall rectangular body portion 62 with the extending clevis 44. The rectangular body portion 62 includes a plurality of threaded bores 64. The bores 64 enable connection with an additional base 42, as illustrated in FIG. 6, to provide larger opening angles. The threaded bores 64 are aligned with bores on the base 42. A guiding portion 66 extends from the body 62. The guiding portion 66 may have an overall U-shape. The guiding portion 66 ensures that the body portion 62 is in the same direction and does not move left or right. The guiding portion 66 compensates for part tolerances.

The base 42 includes a body 70 with an extending arm portion 72. The body 70 has an overall rectangular shape with a plurality of threaded bores 74. The threaded bores enable the base 42 to be secured with a support. The arm 72 includes an aperture 76 that receives the pin 52. The arm 72 pivotally connects the base 42 with the link member 40. The link member 40 and the base 42 pivot with respect to one another. The body 70 includes a guide 71 that cooperates with the guiding portion 66 to ensure proper positioning of the link member 40 and base 42.

A bracket 80 is secured to the base body 70 and the cylinder 12. The bracket 80 includes a body portion 82 and an arm portion 84. The body portion 82 includes a pair of bores 86 that receives threaded fasteners 88. The fasteners 88 secure the bracket 80 onto the body 70 via the threaded bores 74. The arm 84 includes a bore 90 that receives the clevis pin 26. Thus, the bracket 80 movably secures the cylinder 12 with the base 42. The plurality of threaded bores 74 enable the bracket 80 to be aligned in different positions along the longitudinal axis of the body 70. Thus, this enables the actuator 12 to be aligned in various positions along the base 42 to change the opening angle of the link member 40 with respect to the base 42.

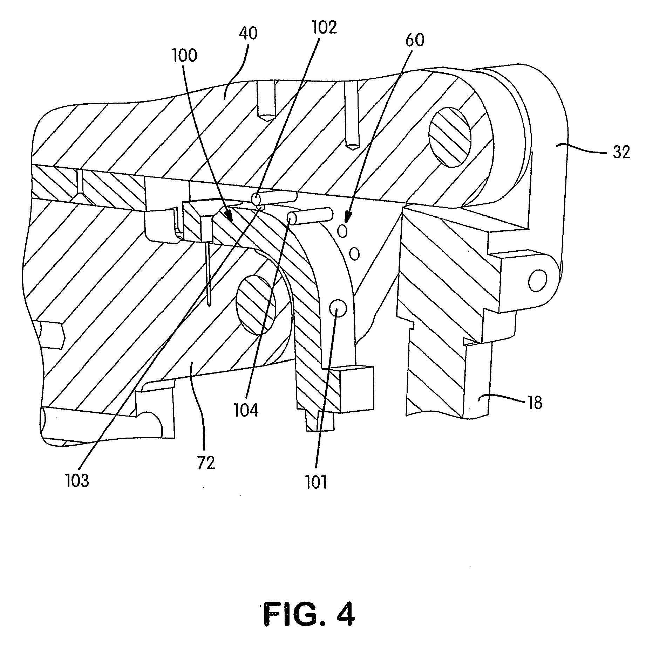

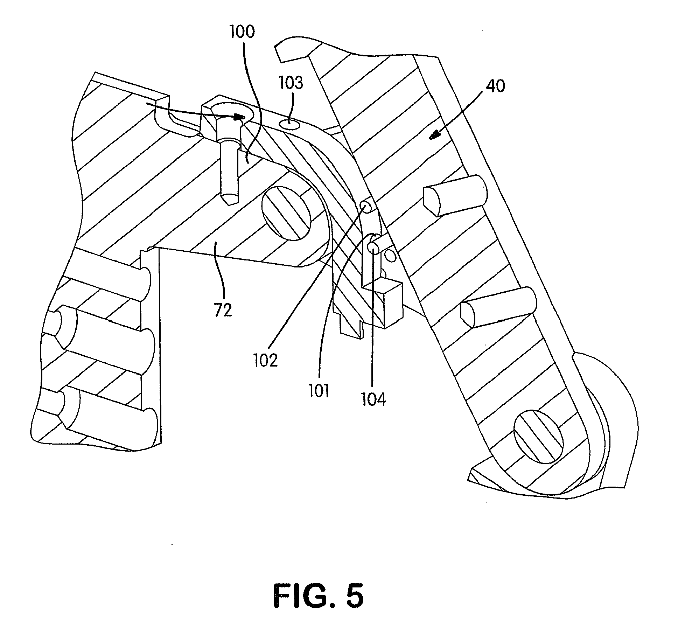

A sensor 100 is positioned onto the arm 72 of the base 42. The sensor 100 is positioned between the link member 40 and base 42. The sensor 100 is protected from shock and splatter from a welding environment. The sensor 100 is connected with a controller to sense the opening sensor 101 and closing sensor 103 of the link with respect to the base 42. An additional pin 102 is positioned through clevis ears 46 and 48 to provide a stop position for the linkage 14, as shown in FIG. 4. The other pin 104 is positioned in one of the plurality of bore 60 to indicate an opening positioned of the linkage 14 that is to be indicated by the sensor 100, as shown in FIG. 5. As the actuator 12 is positioned in various positions along the body 70 of the base 42, the pin 104 is positioned in one of the plurality of bores 60 on the clevis. Thus, as the opening angle of the linkage is changed, the sensing pin 104 must also be changed in the plurality of bores 60 so that the sensor senses when the linkage is in an opened position. The closing pin 102 always remains in one position on the clevis 44.

Various sizes of cylinders may be utilized with the same linkage 14 as illustrated. Thus, larger or smaller cylinders may be coupled with the linkage as long as they include a clevis on their housing.

As illustrated in FIG. 6, the bores 74, 64 of the base and link members 42, 40, respectively, include the same pattern. This enables the base 42 to be aligned with and positioned onto the link 40 as illustrated in FIG. 6. This enables a second actuator to be positioned onto a first actuator in order to reach a larger opening angle.

## Claims

1. A clamp comprising:
a powered actuator including an arm moving between a first and a second position;
a linkage mechanism including a link and a base;
the link and base are pivotally connected with one another, the link is coupled with the arm of the power actuator;
the base is coupled with the actuator; and
the power actuator being movable along the base for adjusting the angle opening between the link and the base.

2. The clamp according to Claim 1, further comprising a bracket arranged between the base and the actuator.

3. The clamp according to anyone of the preceding Claims, further comprising a sensor positioned between the link and the base for sensing the opening angle.

4. The clamp according to anyone of the preceding Claims, further comprising a plurality of different sized actuators can be utilized with the linkage mechanism.

5. The clamp according to Claim 3 or 4, wherein at least one sensor pickup pin is fixed to the link or base for activating the sensor.

6. The clamp according to anyone of the preceding Claims, wherein the power actuator may be a pneumatic cylinder, hydraulic cylinder or electric linear actuator.

7. The clamp according to Claim 5 or 6, wherein a pair of sensor pickup pins activate the sensor to determine the first and second position.

8. The clamp according to Claim 7, wherein one of the pair of sensor pickup pins is fixed in position and the other is adjustable along the link or base.
